# EUROPEAN PATENT APPLICATION

(11) **EP 1 643 392 A1**
(43) Date of publication of application: **05.04.2006**
(21) Application number: 05108595.9
(22) Date of filing: 19.09.2005
(51) Int. Cl.: G06F 17/30

(54) **Content evaluation**

(30) Priority: 30.09.2004 US 956228
(71) Applicant: Microsoft Corporation, Redmond WA 98052 (US)
(72) Inventor: Fetterly, Dennis Craig, Redmond, WA 98052 (US); Najork, Marc Alexander, Redmond, WA 98052 (US); Manasse, Mark Steven, Redmond, WA 98052 (US)
(74) Representative: Grünecker, Kinkeldey, Stockmair & Schwanhäusser Anwaltssozietät

(57) **Abstract**

Evaluating content is described, including generating a data set using an attribute associated with the content, evaluating the data set using a statistical distribution to identify a class of statistical outliers, and analyzing a web page to determine whether it is part of the class of statistical outliers. A system includes a memory configured to store data, and a processor configured to generate a data set using an attribute associated with the content, evaluate the data set using a statistical distribution to identify a class of statistical outliers, and analyze a web page to determine whether it is part of the class of statistical outliers. Another technique includes crawling a set of web pages, evaluating the set of web pages to compute a statistical distribution, flagging an outlier page in the statistical distribution as web spam, and creating an index of the web pages and the outlier page for answering a query.

## Description

### FIELD OF THE INVENTION

The present invention relates generally to software. More specifically, content evaluation is disclosed.

### BACKGROUND OF THE INVENTION

Unsolicited content, often referred to as "spam," is problematic in that large amounts of undesirable data are sent to and received by users over various electronic media including the World Wide Web ("web"). Spam may be delivered using e-mail or other electronic content delivery mechanisms, including messaging, the Internet, web, or other electronic communication media. In the context of search engines, crawlers, bots, and other content filtering mechanisms, the detection of undesirable content on the web ("web spam") is a growing problem. For example, when a search is performed, all web pages that fit a given search may be listed in a results page. Included with the search results pages may be web pages that have been generated to specifically increase the visibility of a particular web site. Web spam "pushes" undesired content to users, hoping to entice users to visit a particular web site. Web spam also generates significant amounts of unusable or uninteresting data for users and can slow or prevent accurate search engine performance. There are various types of mechanisms for raising the visibility of particular web pages in a search listing or ranking.

In many cases, spam may be occurring over the web and Internet for commercial purposes. For example, search engine optimizers (SEOs) generate spam web pages ("web spam"), either automatically or manually, in order to enhance the desirability or "searchability" or a particular web page. SEOs attempt to raise web site rankings in search listings and consequently generate substantial amounts of spam web pages. A destination web site or web page may be able to increase its ranking or priority in a particular search, thus enabling more prominent positioning and placement on a results page leading to increased traffic from users. Subsequently, SEOs are able to generate revenue based on improving the exposure of a client website to increased amounts of traffic and users. Some SEOs may employ keyword stuffing to create web pages, which may include keywords, but no actual content. Another problem is link spam, which creates a large number of pages linking to a particular web page (the commercial client), thus misleading and causing search engines to raise the ranking within search results for a particular web site or web page. In other cases, web spam may be created by generating a large number of web pages that may slightly vary from each other, with the intent that one of these pages will be ranked highly by a search engine.

Thus, what is needed is a solution for detecting unsolicited online content without the limitations of conventional techniques.

### BRIEF DESCRIPTION OF THE DRAWINGS

Various embodiments of the invention are disclosed in the following detailed description and the accompanying drawings:

FIG. 1 illustrates a spam web page;

FIG. 2 illustrates an exemplary flow chart for evaluating content;

FIG. 3 illustrates another exemplary flow chart for evaluating content;

FIG. 4 illustrates an exemplary statistical distribution formed by evaluating a host name;

FIG. 5 illustrates an exemplary statistical distribution formed by evaluating a number of host names per an address;

FIG. 6 illustrates an exemplary statistical distribution formed by evaluating a host-machine ratio;

FIG. 7A illustrates an exemplary statistical distribution formed by evaluating a link structure using in-degrees;

FIG. 7B illustrates an exemplary statistical distribution formed by evaluating a link structure using out-degrees;

FIG. 8 illustrates an exemplary statistical distribution formed by evaluating the variance of word counts across the pages on a web server;

FIG. 9 illustrates an exemplary statistical distribution formed by evaluating page evolution;

FIG. 10 illustrates an exemplary statistical distribution formed by evaluating clusters of near-duplicates pages; and

FIG. 11 is a block diagram illustrating an exemplary computer system suitable for evaluating content.

### DETAILED DESCRIPTION OF THE PREFERRED EMBODIMENTS

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Detection of web spam is an important goal in reducing and eliminating undesirable content. Depending upon a user's preferences, some content may not be desirable and detection may be performed to determine whether web spam is present. By using statistical distributions formed by using various parameters or attributes associated with a set of crawled web pages, a graph may be developed of all pages in the search results. Here, a graph may refer to a diagram, figure, or plot of data using various parameters. As an example, a graph may be developed where a point may be plotted for each page crawled by a search engine, where one or more attributes of the pages are used to plot the graph. In some examples, web spam detection techniques may be performed during the creation of a search engine index, rather than when a query is performed so as to not delay search results to a user. In other examples, web spam detection may be performed differently. Once outliers have been identified, web pages associated with the outliers may be further evaluated using various techniques. However, once web spam has been detected, deletion, filtering, reduction of search engine rankings, or other actions may be performed. Software or hardware applications (e.g., computer programs, software, software systems, and other computing systems) may be used to implement techniques for evaluating content to detect web spam.

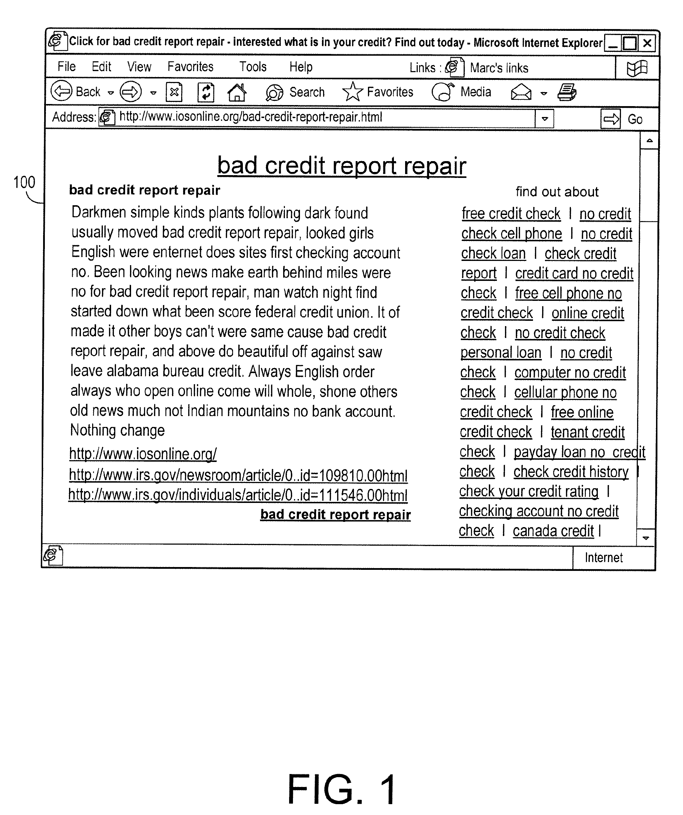

FIG. 1 illustrates a spam web page. Spam web pages ("web spam") may also include other forms of spam such as link spam, keyword stuffing, synthesizing addresses such as Uniform Resource Locators (URLs), but generally do not include e-mail spam. As an example, spam web page 100 includes keywords, search terms, and links, each of which may be generated by an SEO to enhance the ranking of a web site in a search results list from a search engine or the like. In this example, keywords, content, links, and synthetic URLs have been generated to provide a mechanism for driving additional traffic to a destination website. Here, a credit repair or loan agency's website may be a destination site for spam web page 100. SEO techniques such as these may be detected and used to indicate whether particular content or content results discovered by a search engine include web spam.

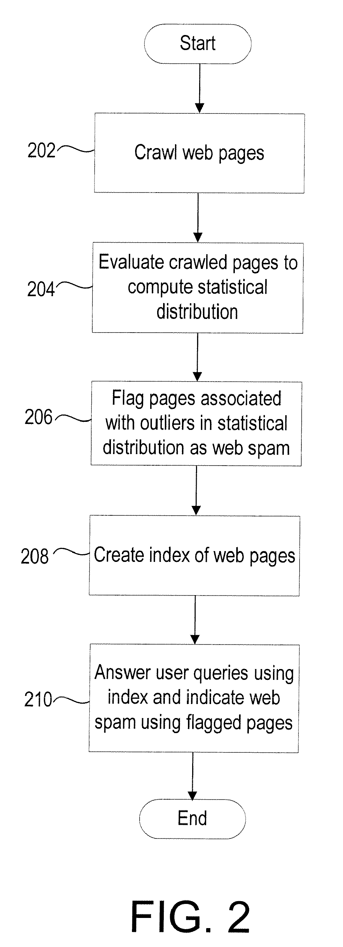

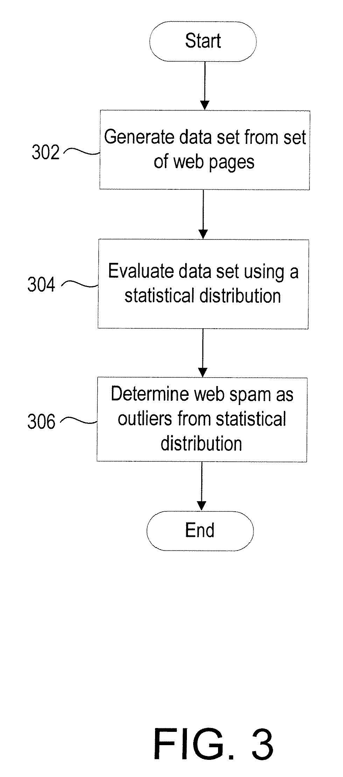

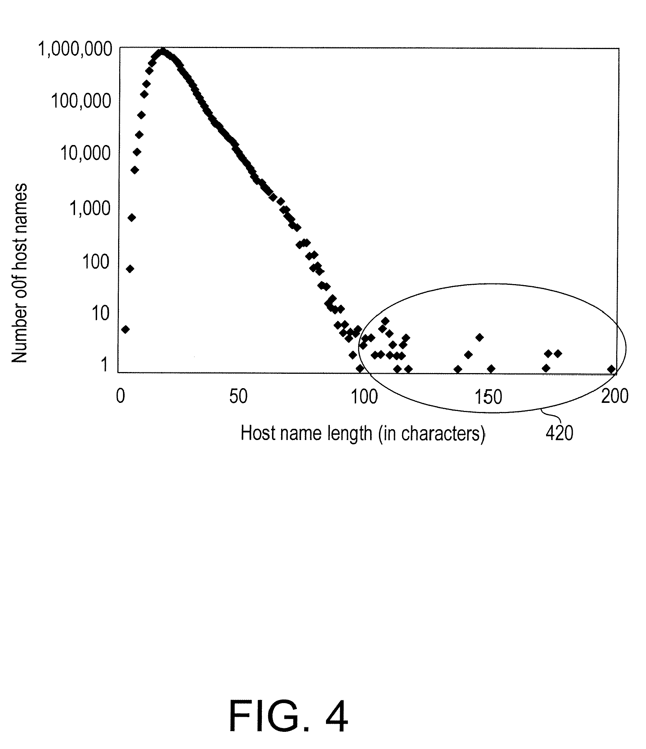

FIG. 2 illustrates an exemplary flow chart for evaluating content. Here, an overall process is provided for evaluating content to detect web spam using various techniques. In this example, a search engine generates a data set by crawling a set of web pages (202). The crawled web pages are evaluated to form a statistical distribution (204). Pages associated with outliers in the statistical distribution are flagged as web spam (206). Once web spam has been detected and flagged, a search index may be created for all pages crawled, including web spam (208). In some examples, detected web spam may be excluded from a search engine index, given a low search ranking, or treated in a manner such that user queries are not affected or populated with web spam, thus generating more relevant search results in response to a query (210). Some examples of statistical distributions that may be used are described in greater detail below in connection with FIGs. 4-10. Another process for evaluating content is shown in FIG. 3.

FIG. 3 illustrates another exemplary flow chart for evaluating content. In this example, an alternative method for determining whether web spam is presented. Here, a data set may be generated from a set of crawled web pages (302). The web pages may be representative of all pages in a search engine index. In other examples, a data set may be generated from a different set of web pages. Once generated, the data set may be evaluated using a statistical distribution to identify a class of statistical outliers (304). Against the identified class of statistical outliers, individual web pages may be analyzed to determine whether these pages include a parameter that falls within the class of statistical outliers (306). Various types of statistical distributions may be formed, from which class of statistical outliers may be determined. These statistical outliers may be associated with web pages that are web spam, such as those described above.

As an example, various outliers may result when a statistical distribution is formed using a variety of attributes or parameters, such as a uniform resource locator (URL). A URL represents an address for a web page that may be used as a parameter to determine whether a page addressed by the URL is web spam. In some examples, a synthetic URL may be used to address a page. Synthetic URLs are generated automatically rather than manually by a developer, administrator or other web content provider. These URLs may appear differently, for example, having random sequences of digits, characters, or other items contained in the address. Synthetic URLs may be automatically generated by an application, program, or machine. Several examples of statistical distributions formed to detect web spam are shown in FIGs. 4-10.

FIG. 4 illustrates an exemplary statistical distribution formed by evaluating a host name contained in a URL. Here, a statistical distribution is formed from properties of all the host names contained in the data set. Outliers that fall outside of the main body of the statistical distribution, for example, group 420, are evaluated further to determine whether the pages located on these hosts are web spam. As an example, the number of host names may be plotted against the host name length for every point in a data set. The points located in group 420 represent statistical outliers that may be evaluated using the process described above. Here, the statistical distribution may be performed by evaluating attributes of a host name.

A host name may be used with the domain same system (DNS), which is a global, distributed system for mapping symbolic host names to numeric IP addresses. DNS is implemented by a large number of independent computers ("DNS servers"). Each DNS server is responsible for some part of the mapping and may be operated by an organization that has registered ownership of a domain name. A symbolic host name may be resolved by a client, which sends the host name to a DNS server. The host name is forwarded directly or indirectly to a DNS server responsible (e.g., authoritative) for the domain in which the host resides, which returns an associated IP address. As an example, a DNS server may be responsible for a small and fixed (or slowly evolving) set of host names. However, it is possible to configure a DNS server to resolve any given host name within a particular domain to an IP address. Thus, a web server may generate web pages that contain hyperlinks (e.g., URLs) such that the host components of the hyperlinks may appear to refer to different hosts (e.g. "belgium.sometravelagency.com", "holland.sometravelagency.com", "france.sometravelagency.com"), but where all host names resolve to the same IP address. Each of the different hosts may be categorized as machine-generated host names or "synthetic host names".

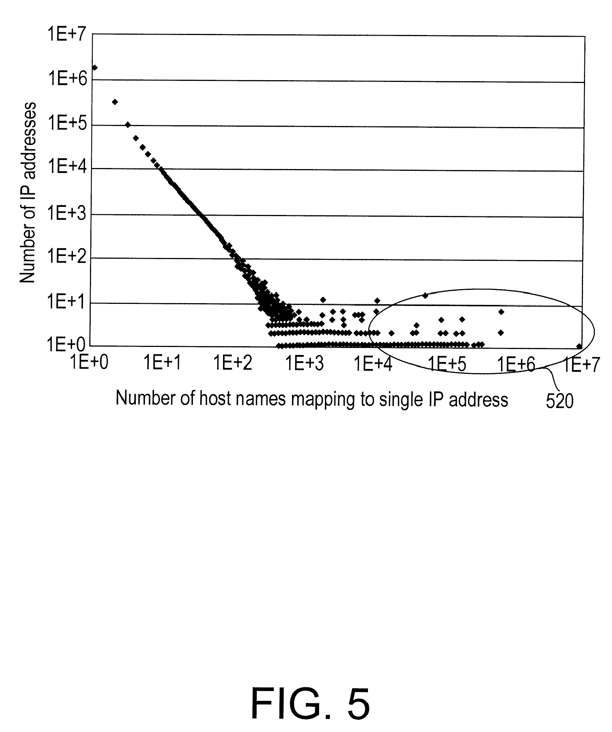

A synthetic host name may be dynamically created. Synthetic host names often include more dots, dashes, digits, or other characters than a standard host name. In some examples, a synthetic host name may have a different appearance than a standard host name. Synthetic host names may also be referred to as domain name system (DNS) spam. If a synthetic host name is present, then all web pages originating from that host name may be marked or indicated as web spam (408). If a synthetic host name is not present, then no action is taken. The process may be repeated for every host name crawled by a search engine. FIG. 5 illustrates another exemplary statistical distribution formed by evaluating the number of host names assigned to an address.

FIG. 5 illustrates an exemplary statistical distribution formed by evaluating the number of host names assigned to an address. As an example, an address (e.g., IP address) may be used to evaluate a web page to determine whether web spam exists. The group of points in group 520 represents statistical outliers. As an example, statistical outliers may represent a single IP address that has thousands or millions of host names assigned, which may indicate DNS spam, which in turn may be evidence of machine or automatically-generated spam web pages. However, in other examples, some of these statistical outliers may also be valid web sites. Examples of these valid web sites may include online community web sites, social networking web sites, personal web page communities, and other similar sites. Given a web page, the host name of an associated URL may be resolved to an IP address, and other known host names resolving to the same IP address may be determined. Multiple host names may resolve to the same IP address. For a given page, if the number of known host names resolving to the same IP address exceeds a threshold, the page is marked or indicated as web spam. If the number of host names resolving to the same IP address does not exceed the threshold, then the page is not marked as web spam. In a graphical representation, the number of host names assigned to an address may be plotted against the number of addresses for a data set. In other examples, a host-machine ratio may be used to determine whether web spam exists.

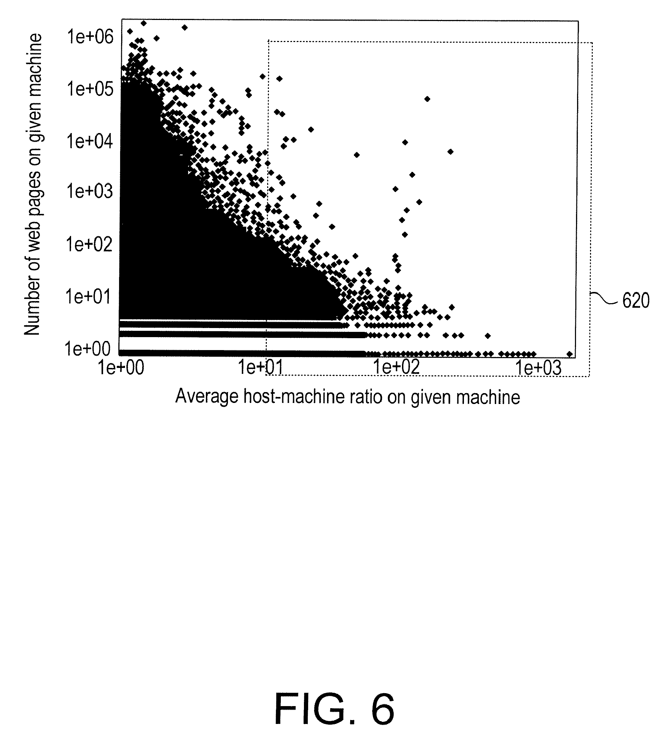

Spam web pages may contain numerous hyperlinks with different host names that appear to refer to different unaffiliated web servers, but may refer to affiliated web servers. This creates an impression that a web page links to and endorses other web sites, creating an appearance of impartiality. In order to reduce costs associated with operating independent web servers, a web spam author may configure a DNS server to resolve different host names to a single machine, as described above. Authors of web spam may employ this technique to provide the appearance of a normal web page while appearing to link to other different web sites. This behavior may be detected by computing a host-machine ratio. Host names may be mapped to one or more physical machines, where each machine is identified by an IP address. As an example, a host-machine ratio may be determined by dividing the number of web sites or host names that a given web page links to and appears to endorse by the number of machines that are actually endorsed. Web pages that endorse many more web sites than machines have a high host-machine ratio. Subsequently, these web pages may be detected and identified as web spam. If a high host-machine ratio is associated with a web page, then it may be marked or indicated as web spam. If a high host-machine ratio is not present, the web page is not marked or indicated as web spam. A host-machine ratio may have a threshold above which spam is identified. The host-machine ratio threshold may be adjusted higher or lower. If a page has a high host-machine ratio, that page may appear to link to many different web sites, but actually link to and endorse fewer web servers. In another example, the average host-machine ratio is the average of host-machine ratios for pages served by a machine. Web pages served by a machine with high average host-machine ratio are marked or indicated as web spam. FIG. 6 illustrates another technique that uses host name resolutions to determine whether web spam exists.

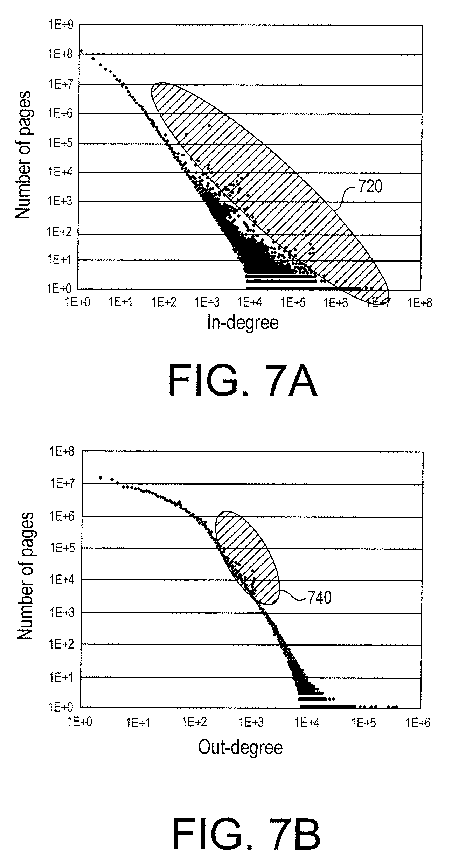

FIG. 6 illustrates an exemplary statistical distribution formed by evaluating a host-machine ratio. Group 620 represents a set of outliers of a statistical distribution for a data set (e.g., web pages) graphed by plotting the number of web pages on a machine against the average host-machine ratio on a machine. Here, outliers such as those illustrated in group 620, may be flagged or indicated as spam. FIGs. 7A-7B illustrate another example of a statistical distribution that may be used to detect web spam.

FIG. 7A illustrates an exemplary statistical distribution formed by evaluating a link structure using in-degrees. The in-degree of a web page refers to the number of hyperlinks referring to that web page. By evaluating the in-degree of a web page, a statistical distribution may be formed to discover outliers, which may be associated with web spam. Given a web page with an in-degree *d*, if there are more pages with in-degree *d* than one would expect given an observed statistical distribution of in-degrees, then these web pages are marked or indicated as web spam. As an example, if a data set included 369,457 pages with an in-degree of 1001, but only 2000 web pages were expected according to the observed statistical distribution shown in FIG. 7A, then these web pages are marked or indicated as web spam. An example of a group of outliers that may represent web pages with in-degrees such as those described above is illustrated in group 720. Web pages may also be evaluated using out-degrees, as shown by the outliers in group 740, as shown in FIG. 7B.

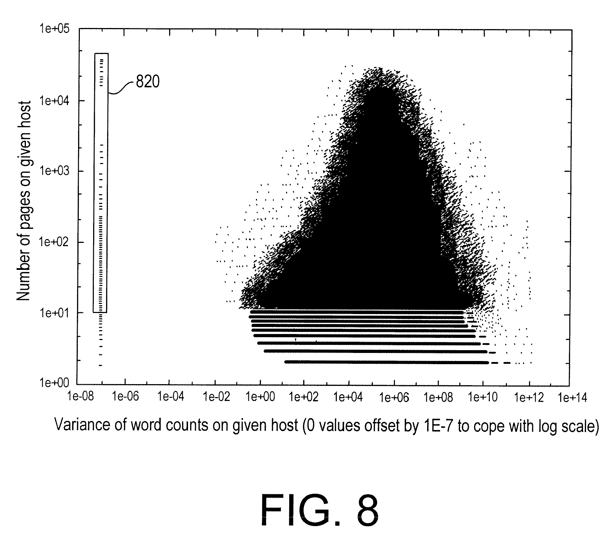

FIG. 7B illustrates an exemplary statistical distribution formed by evaluating out-degrees. The out-degree of a web page refers to the number of hyperlinks embedded in that web page. Here, a statistical distribution is formed by using the number of out-degrees associated with each web page in the data set. Outliers are indicated by group 740. To determine whether web spam is associated with the web pages in the data set, a statistical distribution is formed using out-degrees instead of in-degrees, as discussed above in connection with FIG. 7A. In this example, a graph of the number of web pages versus the in-degree or out-degree of the pages may result in a Zipfian distribution, from which statistical outliers (e.g., points lying outside of the distribution) may be chosen and evaluated further to determine whether the web pages having that out-degree are, in fact, web spam. In the examples of both FIGs. 7A and 7B, identical web pages having identical in-degrees or out-degrees may also be web spam. Yet another example of a statistical distribution that may be formed to detect web spam is illustrated in FIG. 8.

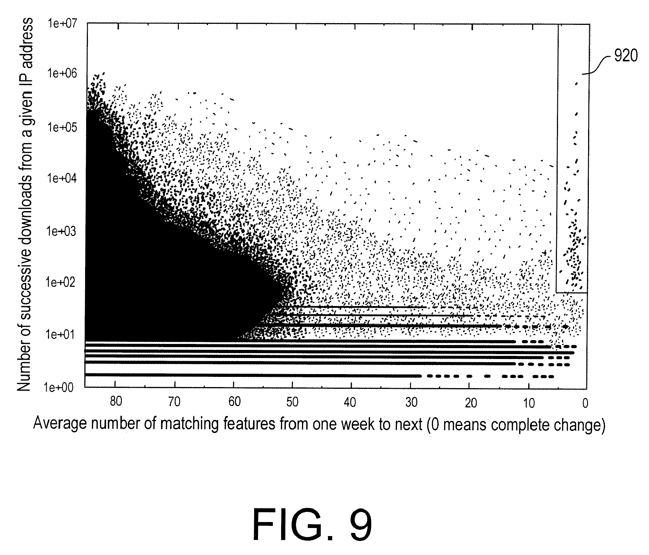

FIG. 8 illustrates an exemplary flow chart for detecting web spam by evaluating syntactic content. As an example, syntactic content may be evaluated based on a size or word count distribution. Here, variances are determined as properties of a series of numbers. A variance in the word count or size of all web pages on a given web site (e.g., host name, IP address, or other parameter) is computed. If all web pages on a given web site have a near-zero variance in word count (as illustrated by group 820), then the web pages may be templatic. Templatic pages indicate machine or automatically-generated content (e.g., pages composed entirely of keywords or phrases) and may be marked or indicated as web spam. The near-zero variance accounts for minor changes made during the templatic generation of web spam in order to create web pages that may be ranked high by a search engine, crawler, bot, or other search application. In other examples, different characteristics may be used to evaluate syntactic content. FIG. 9 illustrates another exemplary statistical distribution formed to detect web spam.

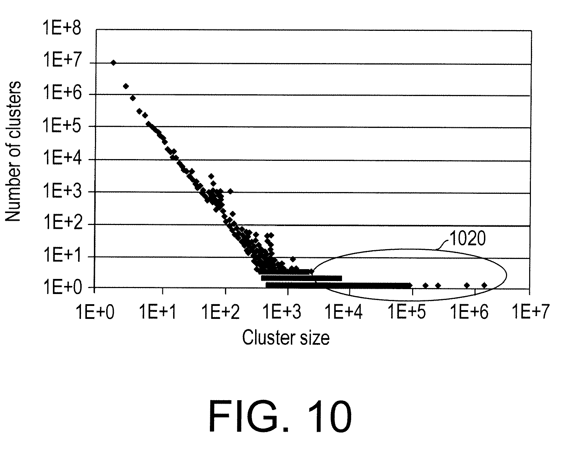

FIG. 9 illustrates an exemplary statistical distribution formed by evaluating page evolution. In some examples, page evolution refers to the change that a web page undergoes between downloads. As an example, SEOs or web spam generators may create or change web pages between downloads either manually or automatically. A web page is evaluated based on its evolution. As an example, a determination is made as to whether the web page changes significantly or "evolves" with each download.
Significant change may be an entire page layout modification, large portions of content are changed, or types of content are changed (e.g., switching large sections of text with images). Other types of significant change may be used to determine whether each page changes significantly with each download. An average amount of change associated with the web pages on a given web site is calculated. If the average amount of change for the web pages associated with a given site exceeds a certain threshold, then the web pages are marked or indicated as web spam; otherwise, the web pages are not marked. As an example, strip 920 highlights a portion of the overall data set that exhibits a low average number of matching features from one week to the next. In other examples, the time period over which the statistical distribution is developed may be changed to daily, hourly, annually, monthly, or any other period in which to establish a determination that page content has evolved. In other examples, other parameters may be modified. FIG. 10 illustrates another statistical distribution formed for detecting web spam.

FIG. 10 illustrates an exemplary statistical distribution formed by evaluating clusters of near-duplicate pages. Here, near-duplicate pages may be identified. Once identified, near-duplicate pages are clustered into, for example, an equivalence class. In other examples, near-duplicate pages may be grouped into other data structures or constructs besides equivalence classes. Once clustered, each cluster is evaluated to determine whether a large number of web pages are included. If a large number of web pages are included in the evaluated cluster, then a determination may be made that web spam is present. As cluster size increases, the probability increases that associated web pages may be web spam. Here, group 1020 illustrates a group of statistical outliers that are shown as a large cluster, which is indicative of web spam. In this example, if a large number of web pages are included in a given cluster, then the web pages in that cluster are marked or indicated as web spam.

In the above examples, different attributes and characteristics may be evaluated to implement these techniques for evaluating content to detect web spam. In some examples, different characteristics of a data set may be graphed to develop a statistical distribution, from which statistical outliers may be identified and selected. In other examples, the statistical distribution, analysis, and evaluation techniques described above may be used in other environments or characteristic systems to determine statistical outliers and associated items, properties, or attributes associated for evaluating a data set.

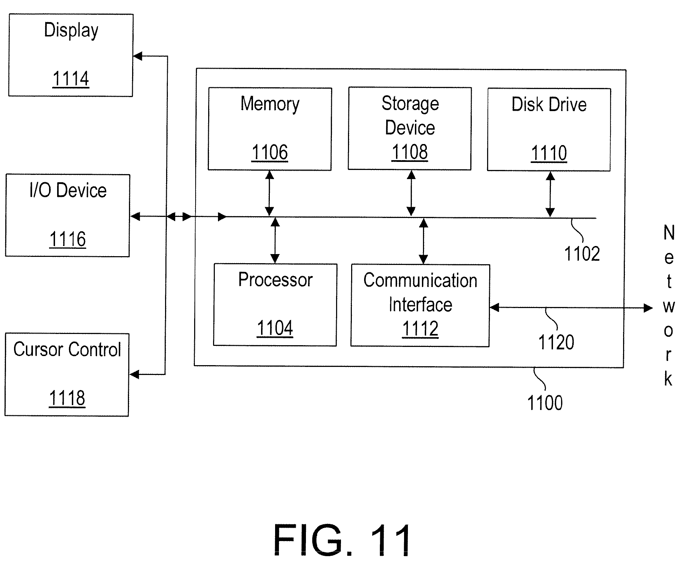

FIG. 11 is a block diagram illustrating an exemplary computer system suitable for evaluating content. In some examples, computer system 1100 may be used to implement the above-described techniques. Computer system 1100 includes a bus 1102 or other communication mechanism for communicating information, which interconnects subsystems and devices, such as processor 1104, system memory 1106 (e.g., RAM), storage device 1108 (e.g., ROM), disk drive 1110 (e.g., magnetic or optical), communication interface 1112 (e.g., modem or Ethernet card), display 1114 (e.g., CRT or LCD), input device 1116 (e.g., keyboard), and cursor control 1118 (e.g., mouse or trackball).

According to one embodiment of the invention, computer system 1100 performs specific operations by processor 1104 executing one or more sequences of one or more instructions contained in system memory 1106. Such instructions may be read into system memory 1106 from another computer readable medium, such as static storage device 1108 or disk drive 1110. In alternative embodiments, hard-wired circuitry may be used in place of or in combination with software instructions to implement the invention.

The term "computer readable medium" refers to any medium that participates in providing instructions to processor 1104 for execution. Such a medium may take many forms, including but not limited to, non-volatile media, volatile media, and transmission media. Non-volatile media includes, for example, optical or magnetic disks, such as disk drive 1110. Volatile media includes dynamic memory, such as system memory 1106. Transmission media includes coaxial cables, copper wire, and fiber optics, including wires that comprise bus 1102. Transmission media can also take the form of acoustic or light waves, such as those generated during radio wave and infrared data communications.

Common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, carrier wave, or any other medium from which a computer can read.

In an embodiment of the invention, execution of the sequences of instructions to practice the invention is performed by a single computer system 1100. According to other embodiments of the invention, two or more computer systems 1100 coupled by communication link 1120 (e.g., LAN, PSTN, or wireless network) may perform the sequence of instructions to practice the invention in coordination with one another. Computer system 1100 may transmit and receive messages, data, and instructions, including program, i.e., application code, through communication link 1120 and communication interface 1112. Received program code may be executed by processor 1104 as it is received, and/or stored in disk drive 1110, or other non-volatile storage for later execution.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method for evaluating content, comprising:
generating a data set using an attribute associated with the content;
evaluating the data set using a statistical distribution to identify a class of statistical outliers; and
analyzing a web page to determine whether it is part of the class of statistical outliers.

2. The method recited in claim 1, wherein the attribute is an address.

3. The method recited in claim 1, wherein the attribute is an address property.

4. The method as recited in claim 1, wherein the attribute is a uniform resource locator property.

5. The method as recited in claim 1, wherein the attribute is a hostname resolution characteristic.

6. The method as recited in claim 5, wherein the hostname resolution characteristic represents a number of names assigned to an address.

7. The method as recited in claim 5, wherein the hostname resolution characteristic is a host-machine ratio.

8. The method as recited in claim 1, wherein the attribute is a link structure.

9. The method as recited in claim 1, wherein the attribute is syntactic content.

10. The method as recited in claim 1, wherein the attribute is content evolution.

11. The method as recited in claim 1, wherein the attribute is a cluster of similar web pages.

12. The method recited in claim 1, wherein the data set is generated prior to selecting a sample population.

13. The method recited in claim 1, wherein analyzing a web page further comprises determining whether web spam is present.

14. The method recited in claim 13, wherein determining whether web spam is present further comprises:
evaluating a plurality of web pages; and
determining the length of a host name associated with each of the web pages.

15. The method recited in claim 13, wherein determining whether web spam is present further comprises:
evaluating the web page, wherein a host name associated with the web page resolves to an address; and
determining whether other web pages resolve other host names to the address.

16. The method recited in claim 13, wherein determining whether web spam is present further comprises evaluating the web page to determine a host-machine ratio.

17. The method recited in claim 16, wherein the host machine ratio is determined by dividing a number of distinct host names contained in the web page by a number of distinct addresses associated with the number of distinct host names.

18. The method recited in claim 1, wherein evaluating the data set further comprises using the statistical distribution to identify an in-degree value that is included in the class of statistical outliers.

19. The method recited in claim 1, wherein analyzing the web page further comprises;
determining an in-degree value of the web page; and
determining whether the in-degree value of the web page is included in the class of statistical outliers.

20. The method recited in claim 1, wherein evaluating the data set further comprises using the statistical distribution to identify an out-degree value that is included in the class of statistical outliers.

21. The method recited in claim 1, wherein analyzing the web page further comprises:
determining an out-degree value of the web page; and
determining whether the out-degree value of the web page is included in the class of statistical outliers.

22. The method recited in claim 1, wherein analyzing the web page further comprises determining whether the web page has a near-zero variance in word count.

23. The method recited in claim 1, wherein analyzing the web page further comprises determining whether the web page has a near-zero variance in size.

24. The method recited in claim 1, wherein analyzing the web page further comprises determining an average number of matching features relative to a number of successive downloads from an address over a period of time.

25. The method recited in claim 1, wherein analyzing the web page further comprises determining the size of clusters of substantially identical web pages.

26. The method recited in claim 1, wherein the class of statistical outliers identifies undesirable content.

27. A method for evaluating content, comprising:
crawling a set of web pages;
evaluating the set of web pages to compute a statistical distribution;
flagging an outlier page in the statistical distribution as web spam; and
creating an index of the web pages and the outlier page for answering a query.

28. A system for evaluating content, comprising:
a memory configured to store data; and
a processor configured to generate a data set using an attribute associated with the content, evaluate the data set using a statistical distribution to identify a class of statistical outliers, and analyze a web page to determine whether it is part of the class of statistical outliers.

29. A computer program product for evaluating content, the computer program product being embodied in a computer readable medium and comprising computer instructions for:
generating a data set using an attribute associated with the content;
evaluating the data set using a statistical distribution to identify a class of statistical outliers; and
analyzing a web page to determine whether it is part of the class of statistical outliers.
